# EUROPEAN PATENT SPECIFICATION

(11) **EP 2 348 761 B1**
(45) Date of publication and mention of the grant of the patent: **03.08.2016**
(21) Application number: 09820246.8
(22) Date of filing: 12.10.2009
(51) Int. Cl.: H04L 12/14

(54) **A METHOD AND SYSTEM FOR ONLINE CHARGING**
VERFAHREN UND SYSTEM ZUR ONLINE-LADUNG
PROCÀDÉ ET SYSTÈME DE FACTURATION EN LIGNE

(30) Priority: 15.10.2008 CN 200810171131
(43) Date of publication of application: 27.07.2011
(73) Proprietor: Huawei Technologies Co., Ltd., Longgang District Shenzhen, Guangdong 518129 (CN)
(72) Inventor: XIAN, Xuhe c/o Huawei Technologies Co.Ltd., Int.Prop.Dept., Shenzhen (CN)
(74) Representative: Kreuz, Georg Maria
(86) International application number: PCT/CN2009/074406
(87) International publication number: WO 2010/043170

(56) References cited:
- EP-A1- 1 802 027
- CN-A- 101 141 539
- CN-A- 101 193 347
- CN-A- 101 217 704
- CN-A- 101 384 010
- US-A1- 2007 173 226

## Description

### FIELD OF THE INVENTION

The present invention relates to communication technologies, and in particular, to an online charging method and a system.

### BACKGROUND OF THE INVENTION

With development of network technologies, intelligent networks attract more and more attention. Currently, the Prepaid Service (PPS) of the mobile core network primarily depends on intelligent networks, and the real-time online charging service in the Circuit Switched (CS) domain of the core network is provided only if it is bound to the intelligent network through subscription.

In the prior art, the CS domain protocol specifications generally implement the online charging function for the PPS users in the CS domain through a Customized Applications for Mobile network Enhanced Logic (CAMEL) protocol or an Intelligent Network Application Protocol (INAP).

However, in the CAMEL or INAP, service control is integrated with the charging, and the online charging service is not available unless it is bound to an intelligent service. Consequently, the service implementation is too close to the charging, and the real-time online charging tends to collide with certain intelligent services, which deteriorates user experience and flexibility of service implementation.

Supposing service 1 and service 2 which are both based on CAMEL subscription, service 1 primarily performs real-time online charging for the user, service 2 is a Virtual Private Network (VPN) service, and the service control method based on CAMEL does not support multi-point control. Therefore, a subscriber of service 1 is unable to subscribe to service 2, namely, service conflict occurs.

EP1802027 A1 relates to a method and apparatus for invoking online charging of a service requested via a communications network and to be accessed according to a first protocol, wherein subscriber information is received from a first network element (102) including information for invoking the online charging, and the received subscriber information is interpreted and in response to a service request online charging is invoked from a second network element (103) for the service by means of a second protocol.

US 2007/173226 relates to a method for providing converged service control and converged charging in legacy networks and IMS networks.

### SUMMARY OF THE INVENTION

The present invention provides an online charging method and system to separate the real-time online charging from the intelligent service subscription and improve user experience and service implementation flexibility.

According to the first aspect of the present invention an online charging method is applied to CS domain services and includes:
obtaining (101) Online Charging System, OCS, subscription information of a user;
performing (102) online charging for the user according to the OCS subscription information;
wherein the obtaining (101) of the OCS subscription information of the user comprises:
   sending (301), by a Gateway Mobile Switching Center, GMSC, a SendRoutingInfoReq to a Home Location Register, HLR, wherein the SendRoutingInfoReq carries an online charging flag which instructs the HLR to return the OCS subscription information; and
   receiving (304), by the GMSC, a SendRoutingInfoRsp returned by the HLR, wherein the SendRoutingInfoRsp carries the OCS subscription information corresponding to the user and stored in the HLR, and the OCS subscription information includes OCS subscription host name or OCS subscription host domain name.

According to the second aspect of the present invention a communication system includes
a Gateway Mobile Switching Center (GMSC), adapted to: send a SendRoutingInfoReq that carries an online charging flag to an HLR, where the online charging flag is intended for instructing the HLR to return OCS subscription information; receive a SendRoutingInfoRsp returned by the HLR, where the SendRoutingInfoRsp carries the OCS subscription information, and the OCS subscription information includes OCS subscription host name or OCS subscription host domain name; and
the HLR, adapted to: receive a SendRoutingInfoReq that carries the online charging flag from the GMSC, add the stored OCS subscription information into the SendRoutingInfoRsp, and send the SendRoutingInfoRsp to the GMSC.

The present invention brings at least the following benefits:
The OCS subscription information of the user is obtained, the user can subscribe according to the OCS subscription information, and the charging for the user can be triggered on the OCS according to the OCS subscription information when the user performs a CS domain service (including originating service and terminating service) that requires charging. Therefore, the user charging in the CS domain is separated from the intelligent service control without involving any Service Control Point (SCP), and the user experience and the flexibility of implementing services are improved.

### BRIEF DESCRIPTION OF THE DRAWINGS

FIG. 1 is an overall flowchart of an online charging method in an embodiment of the present invention;
FIG. 2 shows an online charging method provided in an example useful for understanding the present invention;
FIG. 3 shows an online charging method provided in the second embodiment of the present invention;
FIG. 4 shows an online charging method provided in the third embodiment of the present invention;
FIG. 5 shows a communication system provided in an example useful for understanding the present invention;
FIG. 6 shows a communication system provided in the second embodiment of the present invention;
FIG. 7 shows an MSC/VLR provided in an example useful for understanding the present invention;
FIG. 8 shows mobile switching equipment in an example useful for understanding the present invention;
FIG. 9 shows a GMSC provided in an embodiment of the present invention; and
FIG. 10 shows an HLR provided in an embodiment of the present invention.

### DETAILED DESCRIPTION OF THE EMBODIMENTS

The embodiments of the present invention provide an online charging method and a system. The online charging method and the system are applied to the CS domain service charging to improve user experience and service implementation flexibility.

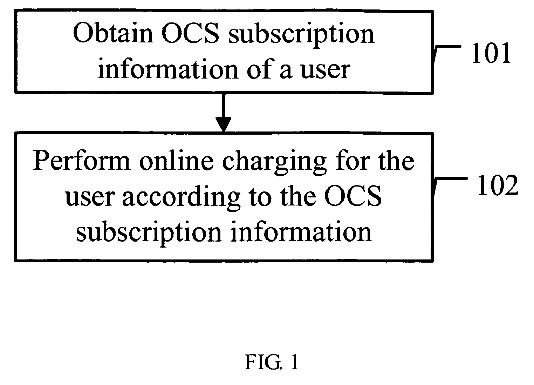

As shown in FIG. 1, an online charging method provided in an embodiment of the present invention includes the following steps:
101. Obtain OCS subscription information of a user.

In this embodiment, the GMSC or MSC/VLR may obtain the user's OCS subscription information in the CS domain service process. The detailed method of obtaining the information will be described in the subsequent embodiments.

Although this embodiment takes GMSC or MSC/VLR as an example, other network elements similar to GMSC or MSC/VLR may work instead to obtain the user's OCS subscription information. The specific network elements are not limited herein.

102. Perform online charging for the user according to the obtained OCS subscription information.

In this embodiment, after the MSC/VLR, for example, obtains the user's OCS subscription information, the CCS can perform online charging according to the OCS subscription information.

When the user implements a CS domain service (including originating service and terminating service), the MSC receives the user's CS domain service request, retrieves the user identifier, and searches the VLR for the OCS subscription information corresponding to the user identifier, namely, judges whether the user has performed OCS subscription. If the MSC finds the OCS subscription information corresponding to the user identifier in the VLR, the MSC determines that the user has performed OCS subscription, and may trigger the user's online charging on the OCS. The OCS performs charging for the user's CS domain service, without involving any SCP. Therefore, online charging is separated from service control, the charging for the user does not conflict with implementation of the intelligent service, and the user experience and the flexibility of implementing services are improved.

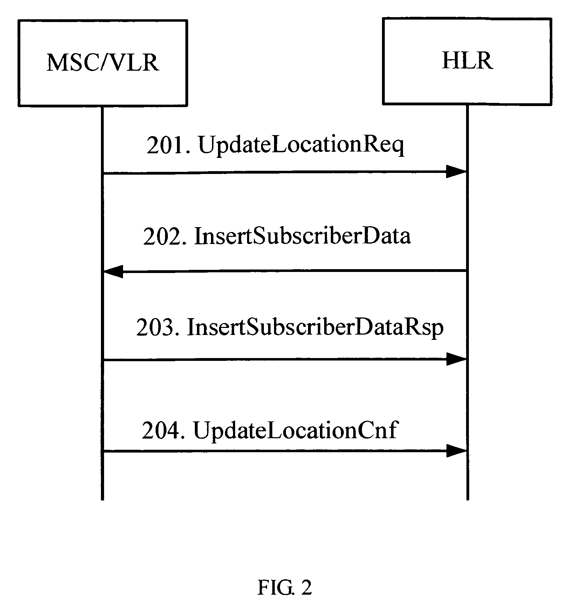

The following describes the online charging method under the present invention in more detail. Depending on the mode of obtaining the OCS subscription information, the online charging method under the present invention fall into the following scenarios:
As shown in FIG. 2, an online charging method provided in an example useful for understanding the present invention includes the following steps:
   201. The MSCNLR sends a location update request to the HLR.

In this embodiment, when the user performs location update, the MSCNLR sends a location update request (UpdateLocationReq) to the HLR. The location update request carries an online charging flag "supportOnlineCharging" and a user identifier of the user that performs location update. The online charging flag indicates that the MSCNLR is capable of triggering online charging based on OCS subscription, namely, the online charging flag instructs the HLR to return OCS subscription information to the MSCNLR.

Although this embodiment takes the location update procedure as an example, other procedures such as attaching procedure may work instead in practice. The type of procedure is not limited herein.

202. The HLR inserts user data into the MSCNLR.

In this embodiment, after the HLR receives the location update request sent by the MSCNLR, the HLR reads the online charging flag in the location update request to know that it is necessary to return OCS subscription information to the MSCNLR. Therefore, the HLR searches the local database for the OCS subscription information or subscription-related information corresponding to the user identifier, and sends an Insert User Data message that carries the found OCS subscription information or subscription-related information to the VLR.

In this embodiment, the user's OCS subscription information or subscription-related information is stored when the user performs network subscription in the HLR.

It should be noted that the HLR may judge the format of the OCS subscription information when sending the Insert User Data message to the MSCNLR, so as to send the message in different modes:
If the OCS subscription information is in a standard format of the 3rd Generation Partnership Project (3GPP), the OCS subscription information may be carried by standard Mobile Application Part (MAP) protocol parameters in the Insert User Data message. The specific mode of carrying the OCS subscription information is similar to the mode of inserting OCS subscription information in a message to the MSCNLR in the Originating CAMEL Subscription Information (O-CSI) subscription mode.

If the format of the OCS subscription information is not a standard 3GPP format, a custom format of the parameters is applicable. Generally, the OCS subscription information is carried in the Insert User Data message in the ExtensionContainer private extension mode specified in MAP PHASE2+, or a supplementary service code (such as a code in "plmn-specificSS-1"-"plmn-specificSS-F") defined by the operator is used an online charging subscription flag.

203. The MSCNLR sends an Insert User Data response to the HLR.

204. The MSC/VLR sends a location update acknowledgement (Ack) message to the HLR.

If the HLR returns subscription-related information, the MSCNLR searches for the OCS subscription information corresponding to the subscription-related information according to the preset mapping relations. The mapping relations may be preset in the MSCNLR.

The subscription-related information in this embodiment may be O-CSI, Terminating CAMEL Subscription Information (T-CSI), or SSCode information, or any combination thereof.

In this embodiment, the MSCNLR may obtain the OCS subscription information in other modes, as detailed below:
When the user performs the CS domain service, the MSCNLR obtains the user identifier of the user. The user identifier includes: an identifier of the HLR that serves the user, an International Mobile Subscriber Identifier (IMSI) of the user, or a Mobile Station ISDN (MSISDN) number of the user, or any combination thereof.

After obtaining the user identifier, the MSCNLR searches for the OCS subscription information corresponding to the user identifier according to the preset mapping relations. The mapping relations may be preset in the MSCNLR.

It should be noted that in this embodiment, a session for charging may be set up between the MSC/VLR and the OCS. In this way, the OCS can perform online charging for the user according to the session.

In this embodiment, the OCS subscription information is obtained through target network subscription. The VLR may add an online charging flag and a user identifier in the location update request sent to the HLR. After reading the online charging flag, the HLR knows that it is necessary to return OCS subscription information to the VLR. The HLR finds the OCS subscription information corresponding to the user identifier, and sends an Insert User Data message that carries the OCS subscription information to the VLR. When the user implements a CS domain service, the MSC receives the user's CS domain service request, retrieves the user identifier of the user, and searches the VLR for the OCS subscription information corresponding to the user identifier, namely, judges whether the user has performed OCS subscription. If the MSC finds the OCS subscription information corresponding to the user identifier in the VLR, the MSC determines that the user has performed OCS subscription, and may trigger the user's online charging on the OCS. The OCS performs charging for the user's CS domain service, without involving any SCP. Therefore, online charging is separated from service control, the charging for the user does not conflict with implementation of the intelligent service, and the user experience and the flexibility of implementing services are improved.

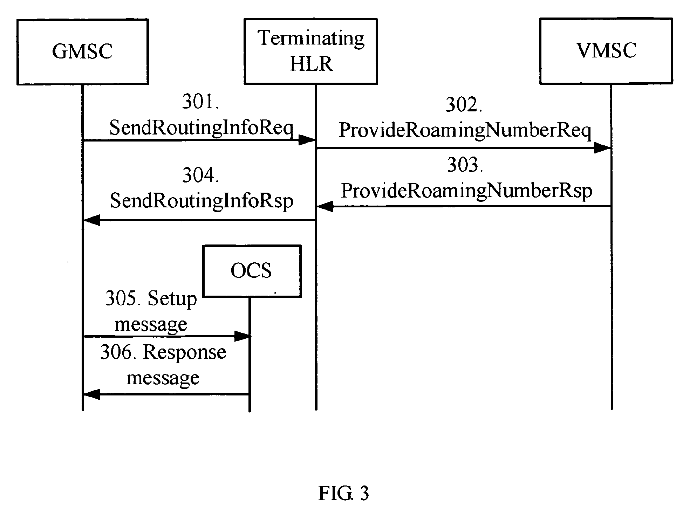

As shown in FIG 3, an online charging method provided in a second embodiment of the present invention includes the following steps:
301. The GMSC sends a SendRoutingInfoReq to the called HLR.

In this embodiment, the GMSC sends a SendRoutingInfoReq to the called HLR. The SendRoutingInfoReq carries an online charging flag "supportOnlineCharging" and the user identifier of the called user. The online charging flag indicates that the GMSC is capable of triggering online charging based on OCS subscription, namely, the online charging flag instructs the called HLR to return OCS subscription information to the GMSC.

302. The called HLR sends a ProvideRoamingNumberReq to a called Visited Mobile Switching Center (VMSC).

In this embodiment, the called HLR sends a ProvideRoamingNumberReq to the VMSC of the called user after receiving the SendRoutingInfoReq from the GMSC. The ProvideRoamingNumberReq carries the called user identifier received by the called HLR in step 301.

303. The VMSC returns a ProvideRoamingNumberRsp to the called HLR.

After receiving the ProvideRoamingNumberReq from the called HLR, the VMSC searches for the roaming number corresponding to the called user according to the called user identifier carried in the ProvideRoamingNumberReq, and returns the roaming number through a ProvideRoamingNumberRsp to the called HLR.

304. The called HLR returns a SendRoutingInfoRsp to the GMSC.

In this embodiment, the called HLR obtains the called user identifier in step 301, and reads the online charging flag carried in the SendRoutingInfoReq sent by the GMSC. Therefore, the called HLR searches the local database for the OCS subscription information or subscription-related information corresponding to the called user, and sends the called user roaming number obtained in step 303 and the found OCS subscription information or subscription-related information through a SendRoutingInfoRsp to the GMSC.

If the called HLR returns subscription-related information, the GMSC searches for the OCS subscription information corresponding to the subscription-related information according to the preset mapping relations. The mapping relations may be preset in the GMSC.

The subscription-related information in this embodiment may be O-CSI, T-CSI, or SSCode information, or any combination thereof.

In this embodiment, the GMSC may obtain the OCS subscription information in other modes, as detailed below:
When the user performs the CS domain service, the GMSC obtains the user identifier of the user. The user identifier includes: an identifier of the HLR that serves the user, an IMSI of the user, or an MSISDN number of the user, or any combination thereof.

After obtaining the user identifier, the GMSC searches for the OCS subscription information corresponding to the user identifier according to the preset mapping relations. The mapping relations may be preset in the GMSC.

305-306. Response messages are exchanged between the GMSC and the OCS to set up an initial session.

In this embodiment, a Session Charging with Unit Reservation (SCUR) session based on the DIAMETER protocol is set up between the GMSC and the OCS to ensure that the OCS can implement online charging for the called user. The charging is not started immediately, but is started when the called user answers the call.

In this embodiment, the OCS subscription information is obtained through one attempt of retrieving the roaming number. The GMSC obtains the user's OCS subscription information from the called HLR. Therefore, when the called user implements a CS domain service, the GMSC uses the OCS subscription information to trigger the OCS to perform charging for the called user. The OCS performs charging for the user's CS domain service, without involving any SCP. Therefore, online charging is separated from service control, the charging for the user does not conflict with implementation of the intelligent service, and the user experience and the flexibility of implementing services are improved.

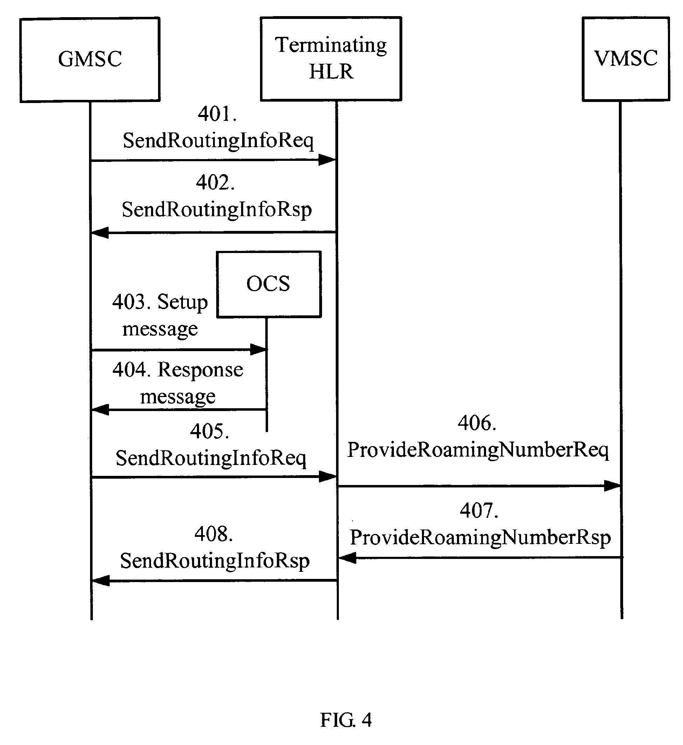

As shown in FIG. 4, an online charging method provided in a third embodiment of the present invention includes the following steps:
401. The GMSC sends a SendRoutingInfoReq to the called HLR.

In this embodiment, the GMSC sends a SendRoutingInfoReq to the called HLR. The SendRoutingInfoReq carries an online charging flag "supportOnlineCharging" and the user identifier of the called user. The online charging flag indicates that the GMSC is capable of triggering online charging based on OCS subscription, namely, the online charging flag instructs the called HLR to return OCS subscription information to the GMSC.

402. The called HLR returns a SendRoutingInfoRsp to the GMSC.

In this embodiment, the called HLR obtains the called user identifier in step 401, and reads the online charging flag carried in the SendRoutingInfoReq sent by the GMSC. Therefore, the called HLR searches the local database for the OCS subscription information or subscription-related information corresponding to the called user, adds the found OCS subscription information or subscription-related information to a SendRoutingInfoRsp and sends the SendRoutingInfoRsp to the GMSC.

If the HLR returns subscription-related information, the GMSC searches for the OCS subscription information corresponding to the subscription-related information according to the preset mapping relations. The mapping relations may be preset in the GMSC.

The subscription-related information in this embodiment may be O-CSI, T-CSI, or SSCode information, or any combination thereof

The mapping relations stored in the GMSC are shown in Table 1:

**Table 1**

| **Subscription information combination obtained from HLR** | **Correspondin g OCS subsciption information combination** | **Description** |
|---|---|---|
| 1. ServiceKey | 1. OCS | The HostName and the RealmName is the host name and the domain name of the peer entity in the DIAMETER protocol, and will be finally converted into the corresponding IP address and port number for implementing communication with the OCS |
| 2. Basic call processing trigger detection point (BCSMTriggerDetectPoint) | subscription host name (HostName) | |
| 3. Service Control Point (SCP) address | 2. OCS subscription host domain name (RealmName) | |

403-404. Response messages are exchanged between the GMSC and the OCS to set up an initial session.

In this embodiment, a SCUR session based on the DIAMETER protocol is set up between the GMSC and the OCS to ensure that the OCS can implement online charging for the called user. The charging is not started immediately, but is started when the called user answers the call.

405. The GMSC sends a SendRoutingInfoReq to the called HLR.

In this embodiment, after obtaining the OCS subscription information of the called user, the GMSC sends a SendRoutingInfoReq to the HLR for a second time. However, the subscription-related information has been obtained before, the SendRoutingInfoReq in this step does not carry the online charging flag, but carries only the called user identifier. That is, the SendRoutingInfoReq in this step does not require the called HLR to return the subscription-related information of the called user any more. The SendRoutingInfoReq in this step is intended for obtaining the roaming number of the called user only.

406. The called HLR sends a ProvideRoamingNumberReq to the called VMSC.

In this embodiment, the called HLR sends a ProvideRoamingNumberReq to the VMSC of the called user after receiving the SendRoutingInfoReq from the GMSC. The ProvideRoamingNumberReq carries the called user identifier received by the called HLR in step 405.

407. The VMSC returns a ProvideRoamingNumberRsp to the called HLR.

After receiving the ProvideRoamingNumberReq from the called HLR, the VMSC searches for the roaming number Corresponding to the called user according to the called user identifier carried in the ProvideRoamingNumberReq, and returns the roaming number through a ProvideRoamingNumberRsp to the called HLR.

408. The called HLR returns a SendRoutingInfoRsp to the GMSC.

In this embodiment, the called HLR obtains the roaming number of the called user in step 407, adds the roaming number of the called user into the SendRoutingInfoRsp, and sends the SendRoutingInfoRsp to the GMSC.

In this embodiment, the OCS subscription information is obtained through two attempts of retrieving the roaming number. The GMSC obtains the user's subscription-related information from the called HLR. Therefore, when the called user implements a CS domain service, the GMSC uses the OCS subscription information to trigger the OCS to perform charging for the called user. The OCS performs charging for the user's CS domain service, without involving any SCP. Therefore, online charging is separated from service control, the charging for the user does not conflict with implementation of the intelligent service, and the user experience and the flexibility of implementing services are improved.

This embodiment differs from the previous embodiment in that: In the previous embodiment, the called HLR returns the OCS subscription information and the roaming number of the called user to the GMSC through the same message in the same process; in this embodiment, the called HLR returns the OCS subscription information or subscription-related information of the called user to the GMSC in a process of retrieving routing information first, and then returns the roaming number of the called user to the GMSC in another process of retrieving routing information.

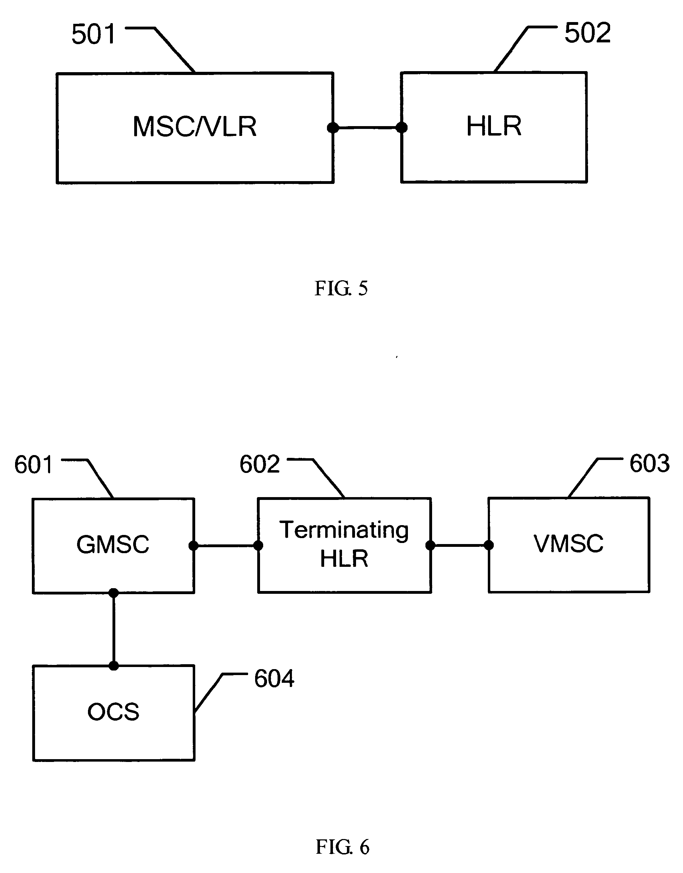

The following describes the communication system under the present invention in detail. Like the method embodiments above, the communication system may fall into the following scenarios:
As shown in FIG. 5, a communication system provided in an example useful for understanding the present invention includes:
   an MSC/VLR 501, adapted to: send a location update request that carries an online charging flag and a user identifier to an HLR 502, where the online charging flag indicates that the MSCNLR is capable of triggering online charging based on OCS subscription; and receive an Insert Usef Data message returned by the HLR 502, where the Insert User Data message carries the OCS subscription information corresponding to the user identifier and stored in the HLR 502; and
   the HLR 502, adapted to: receive the location update request that carries the online charging flag and the user identifier from the MSCNLR 501, search for the OCS subscription information corresponding to the user identifier, and send the Insert User Data message that carries the OCS subscription information to the MSCNLR 501.

The following describes the first embodiment of the communication system applied in a specific scenario.

In this embodiment, when the user performs location update, the MSCNLR 501 sends a location update request (UpdateLocationReq) to the HLR 502. The location update request carries an online charging flag and a user identifier of the user that performs location update. The online charging flag indicates that the MSCNLR 501 is capable of triggering online charging based on OCS subscription, namely, the online charging flag instructs the HLR 502 to return OCS subscription information to the MSCNLR 501.

In this embodiment, after receiving the location update request sent by the MSCNLR 501, the HLR 502 reads the online charging flag in the location update request to know that it is necessary to return OCS subscription information to the MSCNLR 501. Therefore, the HLR 502 searches the local database for the OCS subscription information or subscription-related information corresponding to the user identifier, and sends the found OCS subscription information or subscription-related information to an Insert User Data message through the Insert User Data messageto the MSCNLR 501.

The MSCNLR 501 sends an Insert User Data response to the HLR 502.

The MSCNLR 501 sends a location update Ack message to the HLR 502.

If the HLR 502 returns subscription-related information, the MSCNLR 501 searches for the OCS subscription information corresponding to the subscription-related information according to the preset mapping relations. The mapping relations may be preset in the MSCNLR 501.

The subscription-related information in this embodiment may be O-CSI, T-CSI, or SSCode information, or any combination thereof.

In this embodiment, the OCS subscription information is obtained through target network subscription. The MSCNLR 501 may add an online charging flag and a user identifier in the location update request sent to the HLR 502. After reading the online charging flag, the HLR 502 knows that it is necessary to return OCS subscription information to the MSCNLR 501. The HLR 502 finds the OCS subscription information corresponding to the user identifier, and sends an Insert User Data message that carries the OCS subscription information to the MSCNLR 501. When the user implements a CS domain service, the MSC receives the user's CS domain service request, retrieves the user identifier of the user, and searches the MSCNLR 501 for the OCS subscription information corresponding to the user identifier, namely, judges whether the user has performed OCS subscription. If the MSC finds the OCS subscription information corresponding to the user identifier in the MSCNLR 501, the MSC determines that the user has performed OCS subscription, and may trigger the user's online charging on the OCS. The OCS performs charging for the user's CS domain service, without involving any SCP. Therefore, online charging is separated from service control, the charging for the user does not conflict with implementation of the intelligent service, and the user experience and the flexibility of implementing services are improved.

As shown in FIG. 6, a communication system provided in the second embodiment of the present invention includes:
a GMSC 601, adapted to: send a SendRoutingInfoReq that carries an online charging flag and a user identifier to a called HLR 602, where the online charging flag indicates that the GMSC 601 is capable of triggering online charging based on OCS subscription; and receive a SendRoutingInfoRsp returned by the called HLR 602, where the SendRoutingInfoRsp carries the OCS subscription information or subscription-related information corresponding to the user identifier and stored in the called HLR 602;
the called HLR 602, adapted to: receive the SendRoutingInfoReq that carries the online charging flag and the user identifier from the GMSC 601, obtain a corresponding roaming number from a VMSC 603 according to the user identifier, and send a SendRoutingInfoRsp to the GMSC 601, where the SendRoutingInfoRsp carries the roaming number and the stored OCS subscription information or subscription-related information corresponding to the user identifier; and
a VMSC 603, adapted to interact with the called HLR 602, and send the roaming number corresponding to the user identifier to the called HLR 602.

In this embodiment, the GMSC 601 is further adapted to set up a SCUR session based on the DIAMETER protocol with the OCS 604.

The following describes the first embodiment of the communication system applied in a specific scenario:
In this embodiment, the GMSC 601 sends a SendRoutingInfoReq to the called HLR 602.

The SendRoutingInfoReq carries an online charging flag "supportOnlineCharging" and the user identifier of the called user. The online charging flag indicates that the GMSC 601 is capable of triggering online charging based on OCS subscription, namely, the online charging flag instructs the called HLR 602 to return OCS subscription information to the GMSC 601.

After receiving the SendRoutingInfoReq from the GMSC 601, the called HLR 602 sends a ProvideRoamingNumberReq to the VMSC 603 of the called user. The ProvideRoamingNumberReq carries the called user identifier received by the called HLR 602.

After receiving the ProvideRoamingNumberReq from the called HLR 602, the VMSC 603 searches for the roaming number corresponding to the called user according to the called user identifier carried in the ProvideRoamingNumberReq, and returns the roaming number through a ProvideRoamingNumberRsp to the called HLR 602.

The called HLR 602 obtains the called user identifier, and reads the online charging flag carried in the SendRoutingInfoReq sent by the GMSC 601. Therefore, the called HLR searches the local database for the OCS subscription information or subscription-related information corresponding to the called user, and sends the found OCS subscription information or subscription-related information and the called user roaming number through a SendRoutingInfoRsp to the GMSC 601, where the SendRoutingInfoRsp carries the called user roaming number.

If the HLR 602 returns subscription-related information, the GMSC 601 searches for the OCS subscription information corresponding to the subscription-related information according to the preset mapping relations. The mapping relations may be preset in the GMSC 601.

The subscription-related information in this embodiment may be O-CSI, T-CSI, or SSCode information, or any combination thereof.

A SCUR session based on the DIAMETER protocol is set up between the GMSC 601 and the OCS 604 to ensure that the OCS 604 can implement online charging for the called user. The charging is not started immediately, but is started when the called user answers the call.

In this embodiment, the OCS subscription information is obtained through one attempt of retrieving the roaming number. The GMSC 601 obtains the user's OCS subscription information from the called HLR 602. Therefore, when the called user implements a CS domain service, the GMSC 601 uses the OCS subscription information to trigger the OCS 604 to perform charging for the called user. The OCS 604 performs charging for the user's CS domain service, without involving any SCP. Therefore, online charging is separated from service control, the charging for the user does not conflict with implementation of the intelligent service, and the user experience and the flexibility of implementing services are improved.

As shown in FIG 6, a communication system provided in the third embodiment of the present invention includes:
a GMSC 601, adapted to: send a SendRoutingInfoReq that carries an online charging flag and a user identifier to a called HLR 602, where the online charging flag indicates that the GMSC 601 is capable of triggering online charging based on OCS subscription; and receive a SendRoutingInfoRsp returned by the called HLR 602, where the SendRoutingInfoRsp carries the OCS subscription information or subscription-related information corresponding to the user identifier and stored in the called HLR 602; and
the called HLR 602, adapted to: receive the SendRoutingInfoReq that carries the online charging flag and the user identifier from the GMSC 601, and send a SendRoutingInfoRsp to the GMSC 601, where the SendRoutingInfoRsp carries the OCS subscription information or subscription-related information corresponding to the user identifier.

The communication system provided in this embodiment may further include a VMSC 603.

The GMSC 601 is further adapted to set up a SCUR session based on a DIAMETER protocol with the OCS 604, send a SendRoutingInfoReq that carries a user identifier to the called HLR 602, and receive a SendRoutingInfoRsp returned by the called HLR 602, where the SendRoutingInfoRsp carries the roaming number corresponding to the user identifier.

The called HLR 602 is further adapted to receive the SendRoutingInfoReq from the GMSC 601, obtain the corresponding roaming number from the VMSC 603 according to the user identifier in the SendRoutingInfoReq, and send the roaming number through a SendRoutingInfoRsp to the GMSC 601.

The following describes the first embodiment of the communication system applied in a specific scenario.

In this embodiment, the GMSC 601 sends a SendRoutingInfoReq to the called HLR 602. The SendRoutingInfoReq carries an online charging flag "supportOnlineCharging" and the user identifier of the called user. The online charging flag indicates that the GMSC 601 is capable of triggering online charging based on OCS subscription, namely, the online charging flag instructs the called HLR 602 to return OCS subscription information to the GMSC 601.

The called HLR 602 obtains the called user identifier, and reads the online charging flag carried in the SendRoutingInfoReq sent by the GMSC 601. Therefore, the called HLR searches the local database for the OCS subscription information or subscription-related information corresponding to the called user, and sends the found OCS subscription information or subscription-related information through a SendRoutingInfoRsp to the GMSC 601.

If the HLR 602 returns subscription-related information, the GMSC 601 searches for the OCS subscription information corresponding to the subscription-related information according to the preset mapping relations. The mapping relations may be preset in the GMSC 601.

The subscription-related information in this embodiment may be O-CSI, T-CSI, or SSCode information, or any combination thereof.

A SCUR session based on the DIAMETER protocol is set up between the GMSC 601 and the OCS 604 to ensure that the OCS 604 can implement online charging for the called user. The charging is not started immediately, but is started when the called user answers the call.

After obtaining the CCS subscription information of the called user, the GMSC 601 sends a SendRoutingInfoReq to the called HLR 602 for a second time. The SendRoutingInfoReq carries only the identifier of the called user, and is intended for obtaining the roaming number of the called user.

After receiving the SendRoutingInfoReq from the GMSC 601, the called HLR 602 sends a ProvideRoamingNumberReq to the VMSC 603 of the called user. The ProvideRoamingNumberReq carries the called user identifier received by the called HLR 602.

After receiving the ProvideRoamingNumberReq from the called HLR 602, the VMSC 603 searches for the roaming number corresponding to the called user according to the called user identifier carried in the ProvideRoamingNumberReq, and returns the roaming number through a ProvideRoamingNumberRsp to the called HLR 602.

The called HLR 602 obtains the roaming number of the called user, adds the roaming number of the called user into a SendRoutingInfoRsp, and sends the SendRoutingInfoRsp to the GMSC 601.

In this embodiment, the OCS subscription information is obtained through two attempts of retrieving the roaming number. The GMSC 601 obtains the user's OCS subscription information from the called HLR 602. Therefore, when the called user implements a CS domain service, the GMSC 601. uses the OCS subscription information to trigger the OCS 604 to perform charging for the called user. The OCS 604 performs charging for the user's CS domain service, without involving any SCP. Therefore, online charging is separated from service control, the charging for the user does not conflict with implementation of the intelligent service, and the user experience and the flexibility of implementing services are improved.

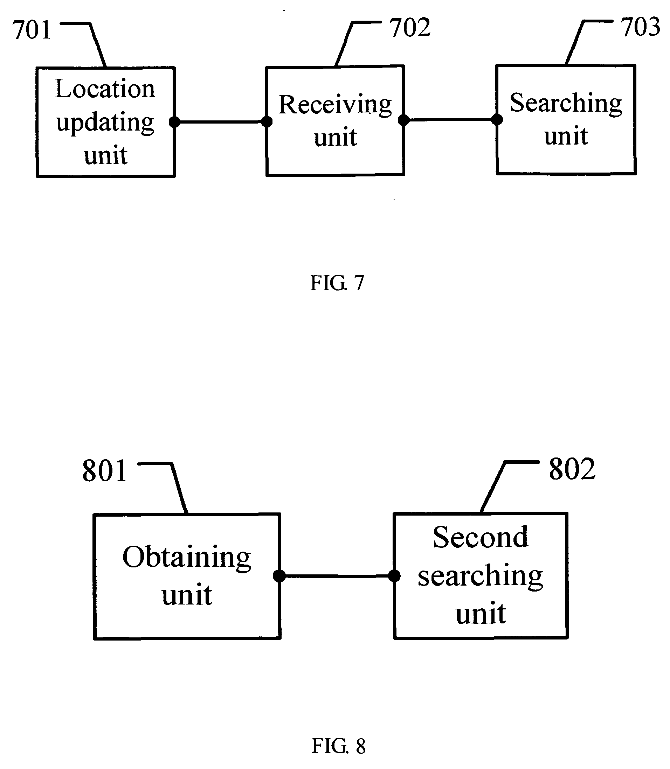

The following describes an MSC/VLR provided in an example useful for understanding the present invention. As shown in FIG. 7, the MSC/VLR includes:
a location update request unit 701, adapted to: send a location update request to an HLR, where the location update request carries an online charging flag and a user identifier, and the online charging flag indicates that the MSC/VLR is capable of triggering online charging based on OCS subscription, namely, the online charging flag instructs the HLR to return OCS subscription information; and
a receiving unit 702, adapted to receive an Insert User Data message returned by the HLR, where the Insert User Data message carries OCS subscription information or subscription-related information corresponding to the user identifier and stored in the HLR.

The MSC/VLR in this embodiment may further include:
a searching unit 703, adapted to search for OCS subscription information corresponding to the subscription-related information according to preset mapping relations.

In this embodiment, the MSC/VLR can obtain the OCS subscription information of the user from the HLR. Therefore, when the user implements a CS domain service, the OCS is triggered to perform charging for the user. The OCS performs charging for the user's CS domain service, without involving any SCP. Therefore, online charging is separated from service control, the charging for the user docs not conflict with implementation of the intelligent service, and the user experience and the flexibility of implementing services are improved.

Another core network mobile switching equipment is provided in an example useful for understanding the present invention. As shown in FIG. 8, the core network mobile switching equipment includes:
an obtaining unit 801, adapted to obtain a user identifier of a user that performs a CS domain service; and
a second searching unit 802, adapted to search for OCS subscription information corresponding to the user identifier according to preset mapping relations.

The core network equipment in this embodiment may be an MSC, VLR, or GMSC.

The user identifier in this embodiment may include: identifier of the HLR that serves the user, IMSI of the user, or MSISDN number of the user, or any combination thereof.

In this embodiment, the core network equipment can obtain the OCS subscription information of the user from the HLR. Therefore, when the user implements a CS domain service, the OCS is triggered to perform charging for the user. The OCS performs charging for the user's CS domain service, without involving any SCP. Therefore, online charging is separated from service control, the charging for the user does not conflict with implementation of the intelligent service, and the user experience and the flexibility of implementing services are improved.

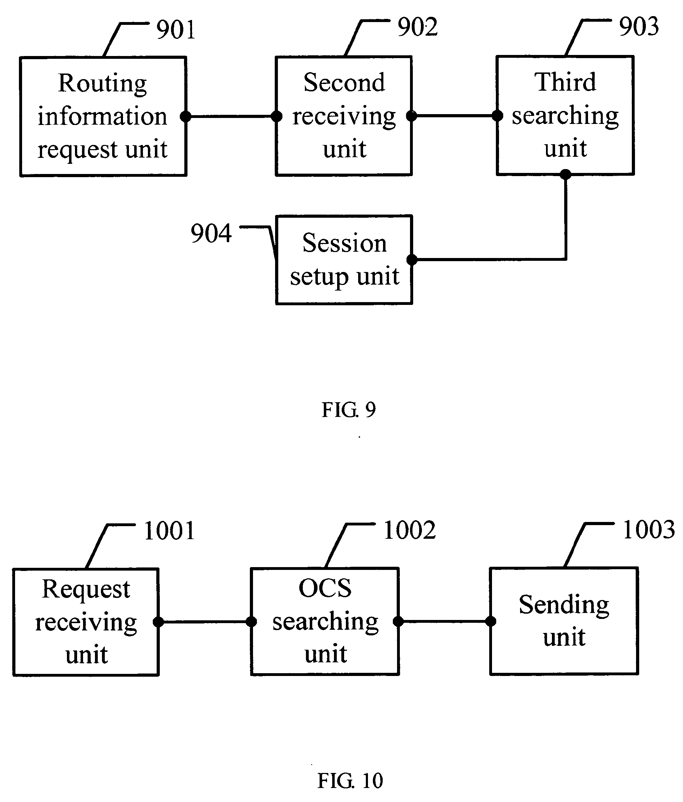

The following describes a GMSC provided in an embodiment of the present invention. As shown in FIG. 9, the GMSC includes:
a routing information request unit 901, adapted to: send a SendRoutingInfoReq to an HLR, where the SendRoutingInfoReq carries an online charging flag and a user identifier, and the online charging flag instructs the HLR to return OCS subscription information; and
a second receiving unit 902, adapted to receive a SendRoutingInfoRsp returned by the HLR, where the SendRoutingInfoRsp carries OCS subscription information or subscription-related information corresponding to the user identifier and stored in the HLR.

The GMSC in this embodiment may further include the following units 903 and 904.

The third searching unit 903 is adapted to search for OCS subscription information corresponding to the subscription-related information according to preset mapping relations.

The subscription-related information in this embodiment may be O-CSI, T-CSI, or SSCode information, or any combination thereof

The session setup unit 904 is adapted to set up a SCUR session based on a DIAMETER protocol with the OCS.

In this embodiment, the GMSC can obtain the OCS subscription information of the user from the HLR directly or indirectly. Therefore, when the user implements a CS domain service, the OCS is triggered to perform charging for the user. The OCS performs charging for the user's CS domain service, without involving any SCP. Therefore, online charging is separated from service control, the charging for the user does not conflict with implementation of the intelligent service, and the user experience and the flexibility of implementing services are improved.

The following describes an HLR provided in an embodiment of the present invention. As shown in FIG. 10, the HLR includes:
a request receiving unit 1001, adapted to receive a request message sent by an MSC/VLR or GMSC, where the request message carries an online charging flag and a user identifier, and the online charging flag indicates that the MSC/VLR or GMSC is capable of triggering online charging based on OCS subscription, namely, the online charging flag instructs the HLR to return OCS subscription information;
an OCS searching unit 1002, adapted to search for OCS subscription information or subscription-related information corresponding to the user identifier; and
a sending unit 1003, adapted to send the OCS subscription information or subscription-related information to the MSC/VLR or GMSC.

In this embodiment, the HLR can send the user's OCS subscription information to the MSC/VLR or GMSC directly or indirectly. Therefore, when the user implements a CS domain service, the OCS performs charging for the user's CS domain service, without involving any SCP. Therefore, online charging is separated from service control, the charging for the user does not conflict with implementation of the intelligent service, and the user experience and the flexibility of implementing services are improved.

Persons of ordinary skill in the art should understand that all or part of the steps of the method in the embodiments of the present invention may be implemented by a program instructing relevant hardware. The program may be stored in a computer readable storage medium, and the storage medium may be a Read-Only Memory (ROM), magnetic disk, or CD-ROM.

Expounded above are an online charging method and system under the present invention. Although the invention is described through some exemplary embodiments, the invention is not limited to such embodiments.

## Claims

1. An online charging method, applied to Circuit Switched, CS, domain services, comprising:
obtaining (101) Online Charging System, OCS, subscription information of a user;
performing (102) online charging for the user according to the OCS subscription information;
**characterized in that** the obtaining (101) of the OCS subscription information of the user comprises:
sending (301), by a Gateway Mobile Switching Center, GMSC, a SendRoutingInfoReq to a Home Location Register, HLR, wherein the SendRoutingInfoReq carries an online charging flag which instructs the HLR to return the OCS subscription information; and
receiving (304), by the GMSC, a SendRoutingInfoRsp returned by the HLR, wherein the SendRoutingInfoRsp carries the OCS subscription information corresponding to the user and stored in the HLR, and the OCS subscription information includes OCS subscription host name or OCS subscription host domain name.

2. The method according to claim 1, wherein the online charging (102) performed for the user according to the OCS subscription information comprises:
setting up a Session Charging with Unit Reservation, SCUR, session based on a DIAMETER protocol between the GMSC and the OCS.

3. A communication system, comprising a Gateway Mobile Switching Center, GMSC, and a Home Location Register, HLR, **characterized in that** the GMSC, (601) is Adapted to: send a SendRoutingInfoReq that carries an online charging flag to a Home Location Register, HLR, (602) wherein the online charging flag is intended for instructing the HLR to return Online Charging System, OCS, subscription information; receive a SendRoutingInfoRsp returned by the HLR, wherein the SendRoutingInfoRsp carries the OCS subscription information, and the OCS subscription information includes OCS subscription host name or OCS subscription host domain name; and **in that** the HLR (602) is adapted to: receive the SendRoutingInfoReq that carries the online charging flag from the GMSC, add the stored OCS subscription information into the SendRoutingInfoRsp,
and send the SendRoutingInfoRsp to the GMSC.

4. The communication system according to claim 3, wherein:
the GMSC (601) is further adapted to set up a Session Charging with Unit Reservation, SCUR, session based on a DIAMETER protocol with an OCS.

## Patentansprüche

1. Online-Rechnungsstellungsverfahren angewandt auf Leitungsvermittlungs-Domänendienste bzw. CS-Domänendienste, das folgende Schritte umfasst:
Erhalten (101) von Online-Rechnungsstellungssystem-Teilnehmerinformationen bzw. OCS- Teilnehmerinformationen eines Benutzers;
Durchführen (102) von Online-Rechnungsstellung für den Benutzer gemäß den OCS-Teilnehmerinformationen;
**dadurch gekennzeichnet, dass** das Erhalten (101) der OCS-Teilnehmerinformationen des Benutzers Folgendes umfasst:
Senden (301), durch eine Gateway-Mobilvermittlungsstelle bzw. GMSC, einer SendRoutingInfoReq an ein Heimatregister bzw. HLR, wobei die SendRoutingInfoReq eine Online-Rechnungsstellungsmarkierung trägt, die das HLR anweist, die OCS-Teilnehmerinformationen zurückzusenden; und
Empfangen (304), durch die GMSC, einer von dem HLR zurückgesendeten SendRoutingInfoRsp, wobei die SendRoutingInfoRsp die OCS-Teilnehmerinformationen trägt, die dem Benutzer entsprechen und in dem HLR gespeichert sind, und die OCS-Teilnehmerinformationen einen OCS-Teilnehmerhostnamen oder einen OCS- Teilnehmerhostdomänennamen beinhalten.

2. Verfahren nach Anspruch 1, wobei die für den Benutzer gemäß den OCS-Teilnehmerinformationen durchgeführte Online-Rechnungsstellung (102) umfasst:
Aufsetzen einer Sitzungsrechnungsstellung mit Einheitsreservation-Sitzung bzw. SCUR-Sitzung, basierend auf einem DIAMETER-Protokoll zwischen der GMSC und dem OCS.

3. Kommunikationssystem, das eine Gateway-Mobilvermittlungsstelle bzw. GMSC und ein Heimatregister bzw. HLR umfasst, **dadurch gekennzeichnet, dass** die GMSC (601) ausgelegt ist zum: Senden einer SendRoutingInfoReq, die eine Online-Rechnungsstellungsmarkierung trägt, an ein Heimatregister bzw. HLR (602), wobei die Rechnungsstellungsmarkierung gedacht ist zum Anweisen des HLR, Online-Rechnungsstellungssystem-Teilnehmerinformationen bzw. OCS-Teilnehmerinformationen zurückzusenden; Empfangen einer von dem HLR zurückgesendeten SendRoutingInfoRsp, wobei die SendRoutingInfoRsp die OCS-Teilnehmerinformationen trägt und die OCS-Teilnehmerinformationen einen OCS-Teilnehmerhostnamen oder einen OCS-Teilnehmerhostdomänennamen beinhalten; und dass das HLR (602) ausgelegt ist zum: Empfangen der SendRoutingInfoReq, die die Online-Rechnungsstellungsmarkierung von der GMSC trägt, Hinzufügen der gespeicherten OCS-Teilnehmerinformationen zu der SendRoutingInfoRsp und Senden der SendRoutingInfoRsp an die GMSC.

4. Kommunikationssystem nach Anspruch 3, wobei:
die GMSC (601) ferner ausgelegt ist zum Aufsetzen einer Sitzungsrechnungsstellung mit Einheitsreservation-Sitzung bzw. SCUR-Sitzung, basierend auf einem DIAMETER-Protokoll mit einer OCS.

## Revendications

1. Procédé de facturation en ligne, appliqué à des services à domaine commuté par circuits, CS, comprenant :
l'obtention (101) d'informations d'abonnement à un système de facturation en ligne, OCS, d'un utilisateur ;
l'exécution (102) d'une facturation en ligne de l'utilisateur conformément aux informations d'abonnement OCS ;
**caractérisé en ce que** l'obtention (101) des informations d'abonnement OCS de l'utilisateur comprend :
l'envoi (301), par un centre de commutation de services mobiles passerelle, GMSC, d'une requête d'envoi d'informations de routage à un enregistreur de position de rattachement, HLR, la requête d'envoi d'informations de routage comportant une balise de facturation en ligne qui donne instruction à l'enregistreur HLR de renvoyer les informations d'abonnement OCS ; et
la réception (304), par le centre GMSC, d'une réponse d'envoi d'informations de routage renvoyée par l'enregistreur HLR, la réponse d'envoi d'informations de routage comportant les informations d'abonnement OCS correspondant à l'utilisateur et mémorisées dans l'enregistreur HLR, et les informations d'abonnement OCS comportent le nom de l'hôte d'abonnement OCS ou le nom de domaine de l'hôte d'abonnement OCS.

2. Procédé selon la revendication 1, dans lequel la facturation en ligne (102) exécutée pour l'utilisateur conformément aux informations d'abonnement OCS comprend :
l'établissement d'une session de facturation de session avec réservation d'unité, SCUR, basée sur un protocole DIAMETER entre le centre GMSC et le système OCS.

3. Système de communication, comprenant un centre de commutation de services mobiles passerelle, GMSC et un enregistreur de position de rattachement HLR ; **caractérisé en ce que** le centre GMSC (601) est adapté pour : envoyer une requête d'envoi d'informations de routage qui inclut une balise de facturation en ligne à un enregistreur de position de rattachement, HLR, (602), la balise de facturation en ligne étant destinée à donner instruction à l'enregistreur HLR de renvoyer des informations d'abonnement à un système de facturation en ligne, OCS ; recevoir une réponse d'envoi d'informations de routage renvoyée par l'enregistreur HLR, la réponse d'envoi d'informations de routage comportant les informations d'abonnement et les informations d'abonnement OCS comportant le nom de l'hôte d'abonnement OCS ou le nom de domaine de l'hôte d'abonnement OCS ; et **en ce que** l'enregistreur HLR (602) est adapté pour : recevoir la requête d'envoi d'informations de routage qui inclut la balise de facturation en ligne depuis le centre GMSC, ajouter les informations d'abonnement OCS mémorisées dans la réponse d'envoi d'informations de routage, et envoyer la réponse d'envoi d'informations de routage au centre GMSC.

4. Système de communication selon la revendication 3, dans lequel :
le centre GMSC (601) est adapté en outre pour établir une session de facturation de session avec réservation d'unité, SCUR, basée sur un protocole DIAMETER avec un système OCS.
